# EUROPÄISCHE PATENTSCHRIFT

(11) **EP 1 657 488 B1**
(45) Veröffentlichungstag und Bekanntmachung des Hinweises auf die Patenterteilung: **15.10.2008**
(21) Anmeldenummer: 05023624.9
(22) Anmeldetag: 28.10.2005
(51) Int. Cl.: F21V 19/00

(54) **Leuchte für Fahrzeuge, vorzugsweise für Kraftfahrzeuge**
Lamp for vehicles, particularly for autovehicles
Lampe pour véhicules, de préférence pour véhicules automobiles

(30) Priorität: 13.11.2004 DE 102004054822
(43) Veröffentlichungstag der Anmeldung: 17.05.2006
(73) Patentinhaber: odelo GmbH, 71409 Schwaikheim (DE); Visiocorp Patents S.à.r.l., 1653 Luxembourg (LU)
(72) Erfinder: Schmierer, Arne, 73230 Kirchheim (DE)
(74) Vertreter: Rausch, Gabriele

(56) Entgegenhaltungen:
- EP-A1- 0 531 185
- DE-A1- 10 160 938
- DE-U1- 29 919 817

## Beschreibung

Die Erfindung betrifft eine Leuchte für Fahrzeuge, vorzugsweise für Kraftfahrzeuge, nach dem Oberbegriff des Anspruches 1 bzw. 2.

Es sind Leuchten für Fahrzeuge bekannt, bei denen LEDs auf einem flexiblen oder festen Leuchtmittelträger sitzen. Die flexiblen Leuchtmittelträger sind vorteilhaft aus einem folienartigen Material mit Leiterbahnen zur Kontaktierung und Positionierung der LEDs versehen. Des Weiteren sind oft zusätzlich zu den LEDs weitere elektronische Bauteile auf dem Leuchtmittelträger angeordnet.

Die Montage derartiger flexibler Leuchtmittelträger in Leuchten ist sehr aufwändig, da die LEDs in eine genaue Einbauposition gebracht werden müssen. Damit der Leuchtmittelträger in einfacher Weise in die gewünschte Einbaulage gebracht werden kann, sind Positionierungs- und Fixierungshilfen notwendig, die ihrerseits oft viel Einbauraum benötigen und so die Leuchte und ihre Herstellung verteuern und aufwändig gestalten. Diese aufwändigen zusätzlichen Maßnahmen schränken die beliebige Formgebung durch die Verwendung komplizierter Werkzeuge ein und stehen somit besonders kompakter Leuchtenausführungen entgegen. Weiter ist zu beachten, dass der Leuchtmittelträger mit seinen LEDs so fixiert werden muss, dass der Leuchtmittelträger nicht in Schwingungen geraten kann. Um diese Schwingungen zu vermeiden, muss oft eine zusätzliche Dämpfung durch entsprechendes Dämmmaterial in Verbindung mit dem Leuchtmittelträger verwendet werden. Erst durch alle diese Maßnahmen erhält der Leuchtmittelträger seine Formstabilität und eine über die Einsatzdauer anhaltende Betriebsfestigkeit.

Bei der bekannten Leuchte (DE 299 19 817 U1) wird der mit LEDs bestückte Leuchtmittelträger in einen im Querschnitt u-förmigen Aufnahmebereich des Gehäuses eingelegt. Wird er nicht durch zusätzliche Positionierungs- und Fixierungshilfen im Gehäuse gehalten, gerät er in unerwünschte Schwingungen. Darum ist bei dieser Leuchte auch vorgesehen, den Leuchtmittelträger in das Leuchtengehäuse einzugießen oder mit diesem zu umspritzen.

Bei einer anderen bekannten Leuchte (DE 101 60 938 A1) wird der Leuchtmittelträger an der Innenseite der Gehäuserückwand befestigt, um eine Lagefixierung des Leuchtmittelträgers zu erreichen.

Der Erfindung liegt die Aufgabe zugrunde, die gattungsgemäße Leuchte so auszubilden, dass eine besonders kompakt und flach bauende, geschlossene Leuchteneinheit in beliebiger Formgebung einfach und kostengünstig hergestellt werden kann.

Diese Aufgabe wird bei der gattungsgemäßen Leuchte erfindungsgemäß mit den kennzeichnenden Merkmalen des Anspruches 1 bzw. 2 gelöst.

Bei der erfindungsgemäßen Leuchte ist der Leuchtmittelträger so geformt, dass seine Formgebung wenigstens teilweise der Innenkontur des Leuchtengehäuses entspricht. Bei der Leuchte nach Anspruch 1 wird der Leuchtmittelträger im Bereich außerhalb des Leuchtmittels zumindest bereichsweise zwischen dem Gehäusevorderteil und der Gehäuserückwand fixiert. Dadurch sind zusätzliche Positionierungs- und Fixiermittel nicht erforderlich. Auch ist es nicht notwendig, den Leuchtmittelträger fest mit dem Gehäusevorderteil oder der Gehäuserückwand zu verbinden.

Bei der Leuchte nach Anspruch 2 wird der Leuchtmittelträger vom Ansatz des Fixierelementes übergriffen und dadurch in seiner Lage fixiert. Das Fixierelement ist Bestandteil des Gehäusevorderteiles, so dass beim Zusammenbau des Gehäuses aus dem Gehäusevorderteil und der Gehäuserückwand bereits der Leuchtmittelträger ohne zusätzliche Positionierungs- und Fixierungselemente in seiner Lage gesichert wird.

Der Leuchtmittelträger kann vorteilhaft eine flexible Leiterfolie sein, auf der die Leuchtmittel sitzen. Die Leiterfolie lässt sich einfach in die gewünschte, an die Gehäuseinnenkontur angepasste Form bringen. Die Formgebung ist vorteilhaft so gewählt, dass die entstehende Form eine Maximalsteifigkeit und Formsteifigkeit des Leuchtmittelträgers gewährleistet. Bei der Montage des Leuchtmittelträgers werden die Leuchtmittel, vorzugsweise LEDs, automatisch durch ihre vorbestimmte Position auf dem Leuchtmittelträger in der Leuchte angeordnet.

Im Innern der Leuchte ragen vorteilhaft Teile des Leuchtmittelträgers in Freiräume, die den Abmessungen und der Dimensionierung des Leuchtmittelträgers entsprechen und von Gehäuseteilen der Leuchte gebildet werden. Der Leuchtmittelträger kann in diesen Freiräumen positionsgenau geklemmt und somit fixiert werden. Die Klemmung des Leuchtmittelträgers verhindert weitgehend, dass die Leuchtmittel und der Leuchtmittelträger in zerstörende Schwingungszustände geraten können.

Die genaue Positionierung und Lagefixierung werden vorteilhaft dadurch gefördert, dass im Innenraum der Leuchte Ausnehmungen zur Aufnahme der Leuchtmittel vorgesehen sind. Durch diese Maßnahmen ist es möglich, besonders raumsparende und kompakte Leuchte zu bauen, die in jeder konstruktiven Ausführung aller Bauteile einfach gestaltet sind. Sie erreichen somit ein Höchstmaß an Zuverlässigkeit und Einsatzmöglichkeit bei geringen Herstellungs- und Montagekosten.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigt:
- Fig. 1: in perspektivischer Darstellung einen Leuchtmittelträger mit einseitig aufgebrachten Leuchtmitteln,
- Fig. 2: einen mehrfach gebogenen Leuchtmittelträger mit beidseitig aufgebrachten Leuchtmitteln,
- Fig. 3 und Fig. 4: einen Querschnitt durch eine erfindungsgemäße Leuchte,
- Fig. 5: eine perspektivische Ansicht einer Gehäuseausführung,
- Fig. 6: einen Schnitt durch das Gehäuse gemäß Fig. 5 mit eingesetztem Leuchtmittel und Leuchtmittelträger,
- Fig. 7 und Fig. 8: ein Spiegelgehäuse eines Außenrückblickspiegels mit eingesetzten Leuchten.

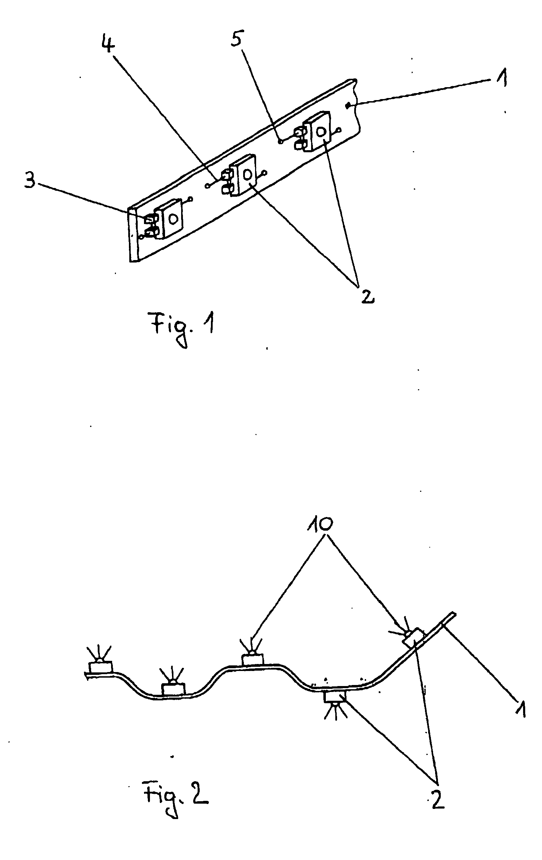

Fig. 1 zeigt einen Leuchtmittelträger 1 mit einseitig aufgebrachten Leuchtmitteln 2, vorzugsweise von LEDs. Sie sind mittels metallischer Anschlußkontakte 3 über zum Beispiel Löten, Schweißen, Toxen und ähnlichen gebräuchlichen Verbindungsverfahren mit Leiterbahnen 4 des Leuchtmittelträgers 1 verbunden. Dieser kann als biegesteife Platine oder als Folie ausgebildet sein. Über diese kontaktierende Verbindung der LEDs 2 mit dem Leuchtmittelträger 1 werden die LEDs 2 einer festen Position auf dem Leuchtmittelträger 1 zugeordnet. Die Leiterbahnen 4 können auf beiden Seiten des Leuchtmittelträgers 1 verlaufen und sind beispielsweise über Verbindungselemente 5 in Form von Durchkontaktierungen miteinander verbunden. Durch diese Gestaltung lassen sich viele elektronische Bauteile platzsparend auf dem Leuchtmittelträger 1 anordnen.

Anstelle der LEDs als Leuchtmittel 2 können auch Glühlampen oder Neonröhren verwendet werden. Eine spezielle Ausführung stellt die Verwendung von elektrolumineszierenden Folien dar. Bei Einsatz einer solchen Folie, die das Licht elektrochemisch zwischen einzelnen Schichten dieser Folie erzeugt, werden keine metallischen Leiterbahnen 4 zur Kontaktierung weiterer elektronischen Bauteile mehr benötigt.

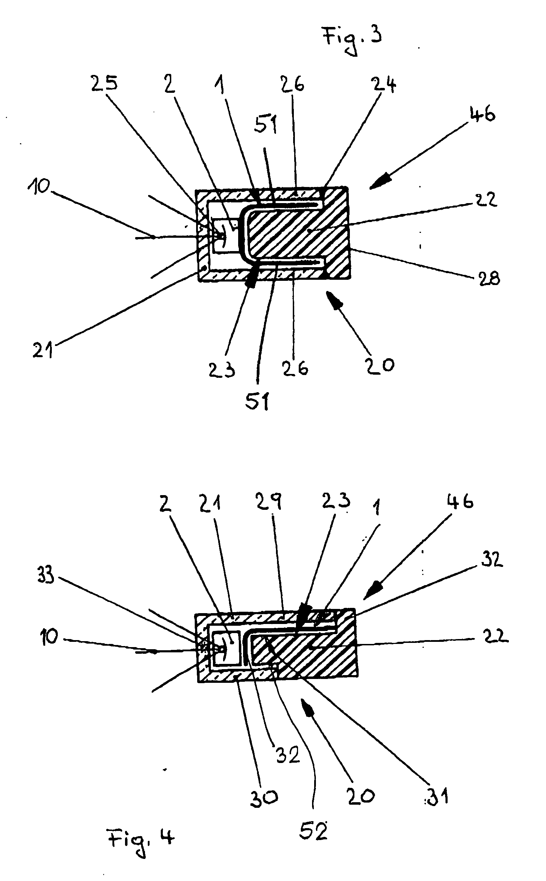

Entsprechend der unter Fig. 1 beschriebenen Ausführungsform ist bei einer beidseitigen Kontaktierung des Leuchtmittelträgers 1 auch eine beidseitige Anbringung des Leuchtmittels 2 möglich. Wie aus Fig. 2 ersichtlich, kann der Leuchtmittelträger 1 in unterschiedlichster Form gekrümmt werden. Dies wird dann nötig, wenn der Leuchtmittelträger 1 in Leuchten/Leuchteinheiten 20 (Fig. 3) eingebaut wird und diese Leuchteneinheit 20 an Konturen und Formverläufen in Innenräumen von Fahrzeugen bzw. im Einzugsbereich einer Fahrzeugaußenseite angepaßt werden soll. Somit wird es möglich, daß diese Leuchteneinheiten 20 vielfältigen Formen und Konturen angepaßt werden können. Derartige Anwendungen können zum Beispiel Innenraumbeleuchtungen eines Fahrzeuges, Leseleuchten, Ambienteleuchten oder auch Beleuchtungen von Schalt- und Bedienelementen sein.

Die in Fig. 3 dargestellte Leuchteneinheit 20 setzt sich im wesentlichen aus einem U-förmigen Gehäusevorderteil 21, das vorzugsweise als transparente Lichtscheibe ausgebildet ist, und einer Gehäuserückwand 22 zusammen. Das U-förmige Gehäusevorderteil 21 weist vorteilhaft über den gesamten Verlauf eine gleichbleibende Wanddicke auf. Auch sind beide Schenkel 26 des U-förmigen Gehäusevorderteiles 21 vorzugsweise symmetrisch in ihren Abmessungen ausgelegt. Die Gehäuserückwand 22 ist im Kontaktbereich mit dem U-förmigen Gehäusevorderteil 21 untrennbar durch eine Schweißnaht 24 oder eine Klebenaht 24 verbunden. Es entsteht somit ein geschlossenes, wasserdichtes Gehäuse 46.

Die Gehäuserückwand 22 weist einen T-förmigen Querschnitt auf, wobei die Breite des T-Fußes einem Vielfachen der Breite des Quersteges entspricht. Im zusammengebauten Zustand ragt der T-Fuß in das Gehäusevorderteil 21, dessen Schenkel 26 mit ihren freien Enden auf dem Quersteg der Gehäuserückwand 22 befestigt sind. Der T-Fuß dient als Tragelement 23 zur Lagefixierung des Leuchtmittels 1. Die Längen- und Dickenausdehnung des T-Fußes wird durch den für das Leuchtmittel 2 und den Leuchtmittelträger 1 benötigten Einbauraum bestimmt. Wie in Fig. 3 dargestellt, ist der Leuchtmittelträger 1 so breit, daß seine Seitenränder 51 um den T-Fuß der Gehäuserückwand 22 gelegt werden können. Im zusammengebauten Zustand der Leuchteneinheit 20 sind die Seitenränder 51 des Leuchtmittelträgers 1 zwischen den Schenkeln 26 des Gehäusevorderteiles 21 und dem T-Fuß der Gehäuserückwand 22 fixiert. Der folienförmige Leuchtmittelträger 1 nimmt somit ebenfalls U-Form an. Infolge dieser Formgebung werden das Leuchtmittel 2 und der Leuchtmittelträger 1 während der Montage und der Leuchteneinheit 20 eindeutig in ihrer Position bestimmt und gehalten.

Diese U-Form und die Positionierung des Leuchtmittelträgers 1 verhindern im zusammengebauten Zustand der Leuchteneinheit 20 ein Verrutschen des Leuchtmittels 2 und des Leuchtmittelträgers 1. Ebenfalls wird hierdurch eine zuverlässige und sichere Montage des Leuchtmittelträgers 1 im Gehäuse 46 ermöglicht. Hierbei entsprechen die Seitenränder 51 des Leuchtmittelträgers 1 und die Abmessungen des Leuchtmittelträgers 2 den zugehörigen Ausnehmungen des freien Innenraumes der Leuchteneinheit 20 zwischen den Schenkeln 26 des Gehäusevorderteiles 21 und dem T-Fuß der Gehäuserückwand 22. Diese konstruktiven Maßnahmen und Auslegungen ermöglichen eine kostengünstige Herstellung und Montage derartiger Leuchteneinheiten 20.

Eine weitere, sehr flach bauende Ausführungsform ist in Fig. 4 dargestellt. Hierbei ist das transparente Gehäusevorderteil 21 in U-förmiger Ausführung mit unterschiedlich langen Schenkeln 29 und 30 ausgebildet. Das Leuchtmittel 2, zum Beispiel eine LED, befindet sich auf dem kurzen Schenkel 32 des im Querschnitt L-förmig abgewinkelten folienartigen Leuchtmittelträgers 1.

Der lange Schenkel 31 des Leuchtmittelträgers 1 liegt in eingebautem Zustand parallel zum langen Schenkel 29 des transparenten Gehäusevorderteiles 21. Der Steg 33 des im Querschnitt U-förmigen Gehäusevorderteiles 21 entspricht der gesamten Innenbreite der Leuchteneinheit 20, wobei diese Innenbreite im wesentlichen den Abmessungen des Leuchtmittels 2 entspricht.

Die Gehäuserückwand 22 ist im Querschnitt im wesentlichen L-förmig gestaltet, wobei im zusammengebauten Zustand der Leuchteneinheit 20 der lange Schenkel 29 des Gehäusevorderteiles 21 mit der Stirnseite des kurzen Schenkels 32 der Gehäuserückwand 22 verbunden ist. Der kurze Schenkel 30 des Gehäusevorderteiles 21 ragt in eine Ausnehmung 52 des langen Schenkels 31. Beide Gehäuseteile 21 und 22 sind entsprechend Fig. 3 mittels geeigneter Verfahren miteinander unlösbar verbunden. Wie beim vorigen Ausführungsbeispiel sind die Schenkel 29, 30 des Gehäusevorderteiles 21 und die Gehäuserückwand 22 so gestaltet, daß im Verbindungsbereich der beiden Gehäuseteile 21, 22 eine glatte, durchgehende Außenseite gebildet wird.

Bei den Ausführungsformen nach den Fig. 3 und 4 kann zumindest ein Teil des folienartigen Leuchtmittelträgers 1 zwischen einem Teil der Gehäuserückwand 22 und einen Teil des transparenten Gehäusevorderteiles 21 des Gehäuses 46 geklemmt werden, was ein Schwingen/Vibrieren des Leuchtmittelträgers 1 und somit eine Beschädigung der empfindlichen Leiterbahnen 4 des Leuchtmittelträgers 1 verhindert. Auch wird hierdurch ein Ablösen der Kontaktstellen zwischen dem Leuchtmittel 2 und den Leiterbahnen 4 verhindert.

Die innere lichte Weite des U-förmigen transparenten Gehäusevorderteiles 21 entspricht im wesentlichen der Ausdehnung des verwendeten Leuchtmittels 2. Bei der Montage dieser Ausführung wird vorausgesetzt, daß der folienartige Leuchtmittelträger 1 entsprechend der Formgebung der Gehäuserückwand 22 verformt wird oder bereits vorgeformt ist. Diese Ausführungsvariante ist durch ihre kompakte Bauweise besonders raumsparend und kann daher gut zum Beispiel als Beleuchtungseinheit im Fahrzeuginnenraum, an Stoßkanten oder dergleichen eingebaut werden.

Durch Kombination gleicher derartiger Leuchteneinheiten 20 können sowohl in der Anordnung seitlich nebeneinander und/oder auch übereinander größere Leuchteneinheiten zusammengestellt werden.

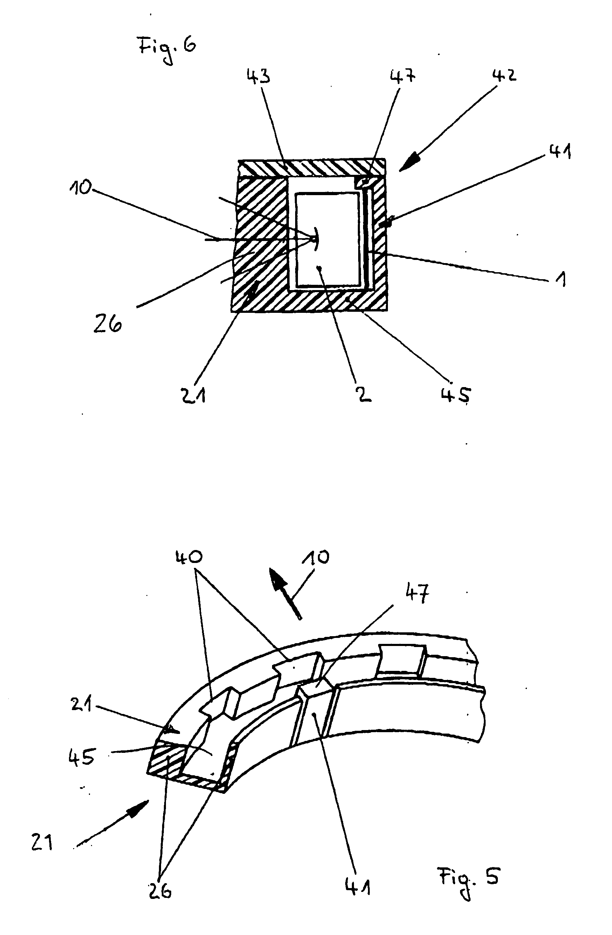

Für den Einsatz gebogener Ausführungen dieser Leuchteneinheit 20 bietet sich die Lösung gemäß Fig. 5 an. Hier ist ausschnittsweise ein kurvenförmiger Abschnitt eines transparenten Gehäuseteiles 21 dargestellt. Der Grundaufbau dieses Gehäuseteiles 21 entspricht ebenfalls einem U-förmigen Profil. Der lichtdurchlässige äußere Schenkel 26 ist wesentlich breiter als der innenliegende Schenkel 26. In diesem wesentlich breiteren Schenkel 26 sind in der Innenseite mit Abstand hintereinander Ausnehmungen 40 entsprechend der geometrischen Form des Leuchtmittels 2 vorhanden. Die Zahl und Lage der Ausnehmungen 40 richtet sich nach dem Einsatzfall der Leuchteneinheit 20. Die Leuchtmittel 2, wie zum Beispiel LEDs, sind für dieses Ausführungsbeispiel vorteilhaft auf dem folienartigen Leuchtmittelträger 1 so positioniert, daß im eingebauten Zustand jeder Ausnehmung 40 ein Leuchtmittel 2 zugeordnet ist. Von der Innenseite der Leuchteneinheit 20 ausgehend sind die Ausnehmungen 40 zur Aufnahme der LEDs 2 derart gestaltet, daß nur geringe Relativbewegungen während der Montage der LEDs 2 in diesen Ausnehmungen 40 möglich sind. Dies ist von großer Bedeutung, da eine Verschiebung der LEDs 2 bzw. Änderungen der Lageposition durch Verdrehen oder durch Verwerfungen des folienartigen Leuchtmittelträgers 1 die Effizienz der Leuchteneinheit 20 beeinträchtigen würde. Ebenso können Schwingungen des Leuchtmittels 2 und/oder des Leuchtmittelträgers 1 während des Betriebs zu einem Versagen der Leuchteneinheit 20 führen.

Um auch hier die Montage möglichst einfach und sicher gestalten zu können, sind an der Außenseite des inneren, dünnen Schenkels 26 L-förmige Fixierelemente 41 vorgesehen. Sie sind vorteilhaft einstückig mit dem Schenkel 26 ausgebildet. Am freien Ende sind die Fixierelemente 41 mit einem kurzen Schenkel 47 (Fig. 5 und 6) versehen, der in Richtung auf den äußeren Schenkel 26 vorsteht. Beim Einbringen des folienartigen Leuchtmittelträgers 1, der in seiner Breite dem Abstand zwischen dem Überstand 47 des Fixierelementes 41 und dem Boden 45 des Gehäusevorderteiles 21 entspricht, wird der folienartige Leuchtmittelträger 1 in seiner Lage eindeutig bestimmt und somit die LEDs 2 in ihrer vorbestimmten Position fixiert. Um das Gehäuse 46 in diesem Fall dicht abschließen zu können, wird ein Deckel 43 auf das Gehäusevorderteil 21 aufgebracht. Auch dieser Deckel 43 kann aus transparentem Material bestehen und mit dem Gehäuseteil 21 durch Kleben oder Schweißen verbunden werden. Wie sich aus Fig. 6 ergibt, haben die Schenkel 26 und der Schenkel 47 des Fixierelementes 41 in einer gemeinsamen Ebene liegende Stirnflächen, so daß der Deckel 43 zuverlässig und sauber aufgesetzt und befestigt werden kann. Diese Ausführungsform der Fig. 5 und 6 stellt eine noch kompaktere Leuchteneinheit 20 dar.

Im dargestellten Ausführungsbeispiel sind die als Vertiefungen ausgebildeten Ausnehmungen 40 gleich groß und in einer Reihe mit Abstand hintereinander angeordnet. Die Ausnehmungen 40 können auch unterschiedlich groß sein und/oder beispielsweise in Längsrichtung des Schenkels 26 versetzt zueinander angeordnet sein.

Vorteilhaft erstrecken sich die Ausnehmungen 40 vom Boden 45 aus über die Höhe des Schenkels 26. Je nach Ausbildung der Leuchtmittel 2 oder Einsatzfall der Leuchteneinheit 20 können sich alle oder nur einige der Ausnehmungen 40 nur über einen Teil der Höhe des Schenkels 26 erstrecken.

Bei entsprechender Dicke des anderen Schenkels 26 können auch dort an der Innenseite entsprechende Ausnehmungen vorgesehen sein.

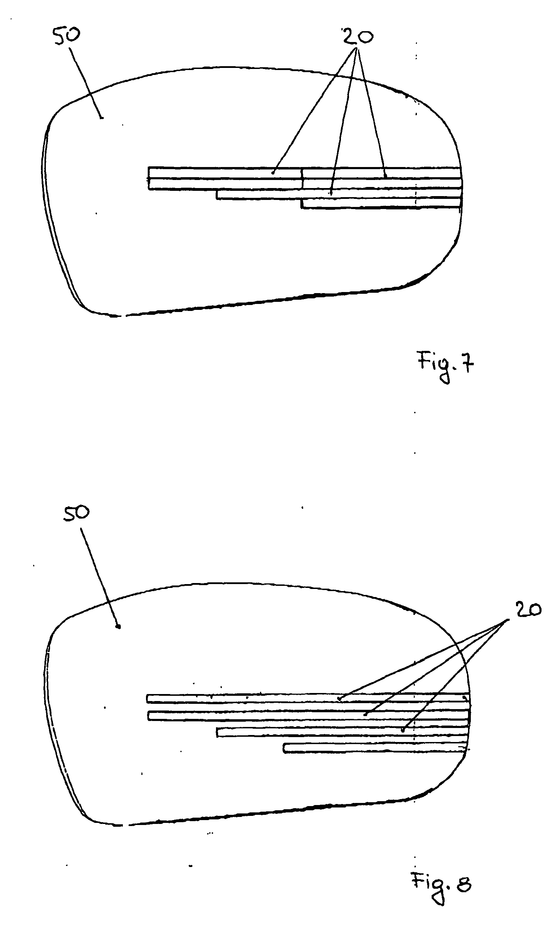

Ein Beispiel für den Einsatz der Leuchteneinheit 20 gemäß den Fig. 5 und 6 könnte das Außenspiegelgehäuse 50 eines Kraftfahrzeuges sein. Hier wäre nur ein dünner Schlitz entsprechend der Höhe des Leuchtengehäuses 46 vorgesehen, der in zusammengebautem Zustand vollständig von der Leuchteneinheit 20 ausgefüllt würde. Eine Fixierung bzw. Abdichtung dieser Leuchteneinheit 20 kann durch Kleben oder durch Verwendung von geeigneten Dichtungen im Innenbereich des Spiegelgehäuses 50 oder durch sonstige gebräuchliche Befestigungs- und Dichtungsmittel erfolgen. Auch hier sind mehrere nebeneinander liegende oder aneinandergereihte Leuchteneinheiten 20, wie in Fig. 7 dargestellt, denkbar.

Ein weiteres Anwendungsbeispiel ist Fig. 8 zu entnehmen. Hierbei sind mehrere derartige flache Leuchteneinheiten 20 parallel beabstandet zueinander in einem Außenspiegelgehäuse 50 eingebaut. Durch die schmalen schlitzförmigen Ausnehmungen im Spiegelaußengehäuse 50 wird die Steifigkeit dieses Spiegelgehäuse 50 weniger geschwächt als bei Ausnehmungen für heute üblich verwendete Leuchteneinsätze.

Durch die einfache Herstellung dieser Leuchteneinheiten 20 sind besonders kostengünstige Ausführungen von Beleuchtungseinrichtungen möglich. Die geringen Abmessungen derartiger Leuchteneinheiten 20 ermöglichen die Kombination von mehreren Leuchteneinheiten 20 bei geringerem Einbauraum und minimalen Material- und Herstellungskosten.

Durch die Verwendung weniger Bauteile und durch die einfache konstruktive Ausführung der Gehäuseteile ist eine automatisierte Montage der Leuchteneinheiten 20 denkbar.

Entsprechend heute gebräuchlicher Ausführungen können derartige Leuchteneinheiten 20 selbstverständlich aus eingefärbten Materialien bestehen.

Ebenso sind sowohl an der Innenseite wie auch im äußeren Bereich der Leuchteneinheit 20 aufgebrachte Optiken denkbar. Die Gehäusebauteile 21 und 22 derartiger Leuchteneinheiten 20 können aus harten Kunststoffen, vorzugsweise aus Polymethylacrylat (PMMA) oder Kunststoffen dieser Familie hergestellt werden. Das rückwärtige Gehäuseteil 22, wie beispielsweise in den Fig. 3 und 4, kann selbstverständlich auch aus einem anderen Kunststoff, wie beispielsweise Polycarbonat (PC), Polybutylenterephalat (PBT) oder dergleichen, hergestellt sein.

## Patentansprüche

1. Leuchte für Fahrzeuge, vorzugsweise für Kraftfahrzeuge, mit einem Gehäuse (46), das aus wenigstens einem Gehäusevorderteil (21) und einer Gehäuserückwand (22) besteht und das mit mindestens einem Leuchtmittel (2) versehen ist, dessen Strahlen nach außen treten und das auf einem Leuchtmittelträger (1) befestigt ist, der in seiner Formgebung wenigstens teilweise der Innenkontur der Gehäuses (46) entspricht,
**dadurch gekennzeichnet, dass** der Leuchtmittelträger (1) im Bereich außerhalb des Leuchtmittels (2) zumindest bereichsweise zwischen dem Gehäusevorderteil (21) und der Gehäuserückwand (22) fixiert ist.

2. Leuchte für Fahrzeuge, vorzugsweise für Kraftfahrzeuge, mit einem Gehäuse (46), das aus wenigstens einem Gehäusevorderteil (21) und einer Gehäuserückwand (22) besteht und das mit mindestens einem Leuchtmittel (2) versehen ist, dessen Strahlen nach außen treten und das auf einem Leuchtmittelträger (1) befestigt ist, der in seiner Formgebung wenigstens teilweise der Innenkontur der Gehäuses (46) entspricht,
**dadurch gekennzeichnet, dass** das Gehäusevorderteil (21) für den Leuchtmittelträger (1) mit wenigstens einem Fixierelement (41) versehen ist, das einen den Leuchtmittelträger (1) übergreifenden Ansatz (47) zur Lagefixierung aufweist.

3. Leuchte nach Anspruch 1 oder 2,
**dadurch gekennzeichnet, dass** die Innenkontur des Gehäuses (46) im Querschnitt einer U-Form entspricht.

4. Leuchte nach Anspruch 1 oder 2,
**dadurch gekennzeichnet, dass** die Innenkontur des Gehäuses (46) im Querschnitt L-förmig ist.

5. Leuchte nach Anspruch 1 oder 2,
**dadurch gekennzeichnet, dass** die Innenkontur des Gehäuses (46) wenigstens bereichsweise gekrümmt ausgebildet ist.

6. Leuchte nach einem der Ansprüche 1 bis 5,
**dadurch gekennzeichnet, dass** der Leuchtmittelträger (1) zumindest bereichsweise an der Innenseite der Gehäuserückwand (22) anliegt.

7. Leuchte nach einem der Ansprüche 1 bis 6,
**dadurch gekennzeichnet, dass** der Leuchtmittelträger (1) zumindest bereichsweise zwischen dem Gehäusevorderteil (21) und der Gehäuserückwand (22) unverrückbar eingeklemmt ist.

8. Leuchte nach einem der Ansprüche 1 bis 7,
**dadurch gekennzeichnet, dass** wenigstens ein Teil des Gehäusevorderteiles (21) die Lichtscheibe der Leuchte bildet.

9. Leuchte nach einem der Ansprüche 1 bis 8,
**dadurch gekennzeichnet, dass** das Gehäusevorderteil (21) im Querschnitt die Form eines U mit gleichen oder unterschiedlichen Schenkeln aufweist.

10. Leuchte nach einem der Ansprüche 1 bis 9,
**dadurch gekennzeichnet, dass** das Gehäuse (46) der Leuchteneinheit (20) geschlossen ist.

11. Leuchte nach einem der Ansprüche 1 bis 10,
**dadurch gekennzeichnet, dass** das Leuchtmittel (2) eine LED ist.

12. Leuchte nach einem der Ansprüche 1 bis 10,
**dadurch gekennzeichnet, dass** das Leuchtmittel (2) eine Glühlampe ist.

13. Leuchte nach einem der Ansprüche 1 bis 10,
**dadurch gekennzeichnet, dass** das Leuchtmittel (2) eine Elektrolumineszenzfolie ist und das gleiche Profil wie der Leuchtmittelträger (1) hat.

14. Leuchte nach einem der Ansprüche 1 bis 13,
**dadurch gekennzeichnet, dass** im Gehäuse (46) Ausnehmungen (40) für das Leuchtmittel (2) vorgesehen sind, die vorteilhaft durch Vertiefungen in der Innenseite des Gehäusevorderteiles (21) gebildet sind.

15. Leuchte nach Anspruch 14,
**dadurch gekennzeichnet, dass** die Ausnehmungen (40) in der Innenseite wenigstens eines Schenkels (26) des Gehäusevorderteiles (21) vorgesehen und vorteilhaft über die Länge des Gehäuses (46) verteilt angeordnet sind.

16. Leuchte nach Anspruch 14 oder 15,
**dadurch gekennzeichnet, dass** die Leuchtmittel (2) in den Ausnehmungen (40) unverrückbar positioniert sind.

17. Leuchte nach einem der Ansprüche 2 bis 16,
**dadurch gekennzeichnet, dass** das Fixierelement (41) einstückig mit dem Gehäusevorderteil (21) ausgebildet ist.

18. Leuchte nach einem der Ansprüche 2 bis 17,
**dadurch gekennzeichnet, dass** der Ansatz (47) in einen Einbauraum für den Leuchtmittelträger (1) ragt.

19. Leuchte nach einem der Ansprüche 1 bis 18,
**dadurch gekennzeichnet, dass** der Leuchtmittelträger (1) eine flexible Leiterfolie ist, an der vorteilhaft an einer, vorzugsweise an beiden Seiten die Leuchtmittel (2) angeordnet sind.

## Claims

1. A light for vehicles, preferably for motor vehicles, comprising a housing (46), which is comprised of at least one housing front portion (21) and a housing rear wall (22), and which is provided with at least one illuminant (2), whose rays pass to the outside and which is mounted on an illuminant support (1), whose shape at least partially corresponds to the inner contour of the housing (46), wherein the illuminant support (1) is fixated in the portion outside of the illuminant (2) at least in sections between the housing front portion (21) and the housing rear wall (22).

2. A light for vehicles, preferably for motor vehicles, comprising a housing (46), which is comprised of at least one housing front portion (21) and a housing rear wall (22), and which is provided with at least one illuminant (2), whose rays pass to the outside, and which is mounted on an illuminant support (1), whose shape at least partially corresponds to the inner contour of the housing (46), wherein the housing front portion (21) is at least provided with one fixation element (41) for the illuminant support (1), wherein said fixation element comprises a shoulder (47), reaching over the illuminant support (1) for positional fixation.

3. A light according to claim 1 or 2, wherein the inner contour of the housing (46) is U-shaped in cross section.

4. A light according to claim 1 or 2, wherein the inner contour of the housing (46) is L-shaped in cross section.

5. A light according to claim 1 or 2, wherein the inner contour of the housing (46) is provided curved at least in portions.

6. A light according to one of the claims 1 through 5, wherein the illuminant support (1) is in contact with the inside of the housing rear wall (22) at least in portions.

7. A light according to one of the claims 1 through 6, wherein the illuminant support (1) is clamped at least in portions between the housing front portion (21) and the housing rear wall (22), so it cannot move.

8. A light according to one of the claims 1 through 7, wherein at least a portion of the housing front portion (21) forms the light pane of the light.

9. A light according to one of the claims 1 through 8, wherein the housing front portion (21) is U-shaped in cross section, wherein the U has identical or different arms.

10. A light according to one of the claims 1 through 9, wherein the housing (46) of the light unit (20) is closed.

11. A light according to one of the claims 1 through 10, wherein the illuminant (2) is an LED.

12. A light according to one of the claims 1 through 10, wherein the illuminant (2) is an incandescent lamp.

13. A light according to one of the claims 1 through 10, wherein the illuminant (2) is an electroluminescent foil and comprises the same profile as the illuminant support (1).

14. A light according to one of the claims 1 through 13, wherein the housing (46) comprises recesses (40) for the illuminant (2), which are preferably formed by depressions on the inside of the housing front portion (21).

15. A light according to claim 14, wherein the recesses (40) are provided on the inside of at least arm (26) of the housing front component (21) and are preferably disposed distributed over the length of the housing (46).

16. A light according to claim 14 or 15, wherein the illuminants (2) are positioned in the recesses (40), so they cannot move.

17. A light according to one of the claims 2 through 16, wherein the fixation element (41) is configured integrally with the housing front portion (21).

18. A light according to one of the claims 2 through 17, wherein the shoulder (47) extends into an installation cavity for the illuminant support (1).

19. A light according to one of the claims 1 through 18, wherein the illuminant support (1) is a flexible conductor foil, at which the illuminants (2) are advantageously disposed on one side, preferably disposed on both sides.

## Revendications

1. Lampe pour véhicules, de préférence pour véhicules automobiles, comprenant un boîtier (46), constitué d'au moins une partie avant (21) de boîtier et d'une paroi arrière (22) de boîtier et pourvu d'au moins un moyen lumineux (2), dont les rayons émergent vers l'extérieur et étant fixé sur un support (1) de moyen lumineux ayant une forme coïncidant au moins en partie avec le contour intérieur du boîtier (46),
**caractérisée en ce que** le support (1) de moyen lumineux dans la périphérie à l'extérieur du moyen lumineux (2) est fixé au moins par sections entre la partie avant (21) du boîtier et la paroi arrière (22) du boîtier.

2. Lampe pour véhicules, de préférence pour véhicules automobiles, comprenant un boîtier (46), constitué d'au moins une partie avant (21) de boîtier et d'une paroi arrière (22) de boîtier et pourvu d'au moins un moyen lumineux (2), dont les rayons émergent vers l'extérieur et étant fixé sur un support (1) de moyen lumineux ayant une forme coïncidant au moins en partie avec le contour intérieur du boîtier (46),
**caractérisée en ce que** la partie avant (21) du boîtier pour le support (1) de moyen lumineux est dotée d'au moins un élément de fixation (41) présentant un appendice (47) venant en prise avec le support (1) de moyen lumineux pour la fixation en position.

3. Lampe selon la revendication 1 ou 2,
**caractérisée en ce que** le contour intérieur du boîtier (46) en section transversale correspond à une forme de U.

4. Lampe selon la revendication 1 ou 2,
**caractérisée en ce que** le contour intérieur du boîtier (46) est en section transversale en forme de L.

5. Lampe selon la revendication 1 ou 2,
**caractérisée en ce que** le contour intérieur du boîtier (46) est conçu au moins par sections de manière courbé.

6. Lampe selon l'une des revendications 1 à 5,
**caractérisée en ce que** le support (1) de moyen lumineux s'applique au moins par sections contre la face intérieure de la paroi arrière (22) du boîtier.

7. Lampe selon l'une des revendications 1 à 6,
**caractérisée en ce que** le support (1) de moyen lumineux est coincé au moins par sections de manière immuable entre la partie avant (21) du boîtier et la paroi arrière (22) du boîtier.

8. Lampe selon l'une des revendications 1 à 7,
**caractérisée en ce qu'**au moins une section de la partie avant (21) du boîtier constitue le diffuseur pour la lampe.

9. Lampe selon l'une des revendications 1 à 8,
**caractérisée en ce que** la partie avant (21) du boîtier présente une section transversale en forme de U avec des branches identiques ou différentes.

10. Lampe selon l'une des revendications 1 à 9,
**caractérisée en ce que** le boîtier (46) du dispositif d'éclairage (20) est fermé.

11. Lampe selon l'une des revendications 1 à 10,
**caractérisée en ce que** le moyen lumineux (2) est une LED.

12. Lampe selon l'une des revendications 1 à 10,
**caractérisée en ce que** le moyen lumineux (2) est une lampe à incandescence.

13. Lampe selon l'une des revendications 1 à 10,
**caractérisée en ce que** le moyen lumineux (2) est un film électroluminescent ayant le même profil que le support (1) de moyen lumineux.

14. Lampe selon l'une des revendications 1 à 13,
**caractérisée en ce que** des évidements (40) sont prévus dans le boîtier (46) pour le moyen lumineux (2), avantageusement conçus par des renfoncements dans la face intérieure de la partie avant (21) du boîtier.

15. Lampe selon la revendication 14,
**caractérisée en ce que** les évidements (40) sont prévus du côté intérieur d'au moins une branche (26) de la partie avant (21) du boîtier et avantageusement agencés de façon espacée sur la longueur du boîtier (46).

16. Lampe selon la revendication 14 ou 15,
**caractérisée en ce que** les moyens lumineux (2) sont mis en position de manière immuable dans les évidements (40).

17. Lampe selon l'une des revendications 2 à 16,
**caractérisée en ce que** l'élément de fixation (41) est conçu d'un seul tenant avec la partie avant (21) du boîtier.

18. Lampe selon l'une des revendications 2 à 17,
**caractérisée en ce que** l'appendice (47) fait saillie dans un espace d'installation du support (1) de moyen lumineux.

19. Lampe selon l'une des revendications 1 à 18,
**caractérisée en ce que** le support (1) de moyen lumineux est un film conducteur flexible sur un côté duquel, de préférence des deux côtés, les moyens lumineux (2) sont avantageusement placés.
